# FASCICULE DE BREVET EUROPEEN

(11) **EP 3 476 110 B1**
(45) Date de publication et mention de la délivrance du brevet: **17.11.2021**
(21) Numéro de dépôt: 17745794.2
(22) Date de dépôt: 23.06.2017
(51) Int. Cl.: H04M 1/67, G06F 1/32, H04M 1/725, H04M 1/7243, H04M 1/72454

(54) **PROCÉDÉ ET DISPOSITIF DE TRAITEMENT D'UN OBJET MULTIMÉDIA**
VERFAHREN UND VORRICHTUNG ZUR VERARBEITUNG EINES MULTIMEDIAOBJEKTS
METHOD AND DEVICE FOR PROCESSING A MULTIMEDIA OBJECT

(30) Priorité: 24.06.2016 FR 1655928
(43) Date de publication de la demande: 01.05.2019
(73) Titulaire: ORANGE, 92130 Issy-les-Moulineaux (FR)
(72) Inventeur: FLOURY, Cédric, 22700 Perros Guirec (FR); MERCIER, Violaine, 22560 Pleumeur Bodou (FR)
(86) Numéro de dépôt international: PCT/FR2017/051684
(87) Numéro de publication internationale: WO 2017/220947

(56) Documents cités:
- EP-A1- 2 642 729
- US-A- 5 550 928

## Description

### Arrière-plan de l'invention

L'invention se rapporte au domaine général des télécommunications.

Elle concerne plus particulièrement l'échange d'objets (i.e. de contenus) multimédias entre plusieurs utilisateurs via un réseau de télécommunications. Aucune limitation n'est attachée à la nature des objets multimédias échangés : il peut s'agir de tout type de contenus multimédias tels que des textes, des photographies, des vidéos, des musiques, etc.

De nos jours, avec le développement croissant des terminaux mobiles et autres tablettes numériques, les utilisateurs échangent de nombreuses données personnelles ou plus généralement de nombreux objets ou contenus multimédia (photographies, textes, etc.) via les réseaux de télécommunications. Pour ce faire, il existe par exemple diverses applications de messagerie (SMS (Short Message Service), MMS (Multimedia Message Service), messagerie instantanée, messagerie électronique, etc.), à partir desquelles les utilisateurs peuvent envoyer des objets multimédias à un ou plusieurs destinataires.

Dans l'état de la technique, lorsqu'un utilisateur A envoie un message à un utilisateur B contenant par exemple une photographie, il est possible à l'utilisateur A d'avoir une confirmation que le message a été vu sur un terminal de l'utilisateur B : par « vu », on entend dans l'état de la technique que l'application de messagerie a été ouverte sur un terminal de l'utilisateur B pour afficher le message. Cette confirmation prend par exemple la forme d'un signe ou symbole distinctif (ex. double coche) affiché dans l'application de messagerie de l'utilisateur A au niveau de la reprise du message envoyé à l'utilisateur B.

Toutefois, l'utilisateur A, en dépit de la présence de ce signe ou symbole, ne sait pas qui a eu réellement accès à son message sur le terminal de l'utilisateur B.

Dans le cadre de l'art antérieur, il est également fait référence aux documents EP 2 642 729 A1 et US 5 550 928 A.

### Objet et résumé de l'invention

L'invention permet notamment de pallier cet inconvénient en proposant un procédé de traitement d'un objet multimédia émis par un dispositif émetteur et reçu par un dispositif destinataire, ce procédé étant mis en oeuvre par le dispositif destinataire et comprenant :
- une étape d'obtention d'au moins une représentation visuelle ou audio d'un voisinage du dispositif destinataire acquise lors d'une ouverture de l'objet multimédia sur le dispositif destinataire ;
- une étape d'extraction de ladite représentation d'au moins une information sur des utilisateurs susceptibles d'avoir eu accès à un contenu de l'objet multimédia lors de son ouverture sur le dispositif destinataire ; et
- une étape d'envoi de ladite au moins une information au dispositif émetteur.

Corrélativement, l'invention vise aussi un dispositif dit destinataire comprenant :
- un module de réception d'un objet multimédia émis par un dispositif émetteur ;
- un module d'obtention, configuré pour obtenir au moins une représentation visuelle ou audio d'un voisinage du dispositif destinataire acquise lors d'une ouverture de l'objet multimédia sur le dispositif destinataire ;
- un module d'extraction, configuré pour extraire de ladite représentation au moins une information sur des utilisateurs susceptibles d'avoir eu accès à un contenu de l'objet multimédia lors de son ouverture sur le dispositif destinataire ; et
- un module d'envoi de ladite au moins une information au dispositif destinataire.

L'invention propose donc de déclencher, lors de l'ouverture d'un objet multimédia émis par un utilisateur émetteur via son terminal ou via tout autre dispositif émetteur approprié (ex. serveur lorsque l'utilisateur émetteur est un fournisseur de contenus, par exemple vidéos) sur le terminal ou tout autre dispositif approprié de l'utilisateur destinataire de l'objet multimédia, l'acquisition d'une représentation visuelle, autrement dit d'une image (ex. vidéo ou photographie), et/ou d'une représentation audio (enregistrement) d'un voisinage du terminal. Aucune limitation n'est attachée à la nature de la représentation ainsi acquise, ni à la nature de l'objet multimédia (message ou texte, photographie, vidéo, musique, etc.). Par ailleurs, un utilisateur émetteur dans la suite de la description peut désigner indifféremment une personne physique ou morale, ou toute autre entité apte à fournir des objets ou des contenus multimédia à un utilisateur destintaire.

La représentation acquise conformément à l'invention permet avantageusement de capturer, au moment de l'ouverture de l'objet multimédia, des informations sur les utilisateurs présents à proximité du dispositif de l'utilisateur destinataire et susceptibles d'avoir eu accès au contenu de l'objet multimédia en même temps que l'utilisateur destinataire. Plus précisément, conformément à l'invention, l'analyse de la représentation ainsi acquise permet d'extraire des informations sur les personnes (utilisateurs) susceptibles d'avoir eu accès au contenu de l'objet multimédia et de transmettre ces informations à l'émetteur de l'objet multimédia afin qu'il soit renseigné sur les personnes physiques qui ont réellement eu accès à cet objet.

On note que différents niveaux d'information peuvent faire l'objet d'un retour vers l'utilisateur émetteur. Ainsi, ladite au moins une information peut comprendre notamment au moins une information parmi :
- un nombre d'utilisateurs susceptibles d'avoir eu accès au contenu de l'objet multimédia lors de son ouverture ;
- des noms des utilisateurs susceptibles d'avoir eu accès au contenu de l'objet multimédia lors de son ouverture ;
- lorsque ladite représentation est une représentation visuelle du voisinage du dispositif destinataire, des images des utilisateurs ou des visages des utilisateurs susceptibles d'avoir eu accès au contenu de l'objet multimédia lors de son ouverture.

L'invention propose donc un procédé très simple qui permet à l'émetteur d'un de l'objet multimédia d'avoir un retour représentatif sur les personnes qui ont eu accès à cet objet multimédia et vu les données transmises dans cet objet. On peut bien entendu envisager d'autres types d'informations sur le contexte de visualisation de l'objet extraites à partir de la représentation visuelle ou audio du voisinage du dispositif destinataire lors de l'ouverture de l'objet multimédia.

Le procédé selon l'invention peut avantageusement tirer profit de capteurs déjà présents ou positionnés sur le dispositif (ex. terminal) de l'utilisateur destinataire, comme par exemple un appareil photo ou une caméra vidéo aptes à acquérir au moins une image des utilisateurs faisant face au dispositif destinataire lors de l'ouverture du message, et/ou encore un microphone qui équipent classiquement les terminaux mobiles aujourd'hui.

Ceci rend très simple la mise en œuvre de l'invention sur les terminaux ou autres dispositifs de communication existants.

En variante, la représentation visuelle ou audio du voisinage du dispositif destinataire peut être acquise au moyen d'un capteur externe au dispositif destinataire et transmise vers le dispositif destinataire via une liaison de données ou un réseau de télécommunications.

Par exemple, on peut envisager d'embarquer un tel capteur sur un objet connecté, déclenche lors de l'ouverture de l'objet multimédia et apte à renvoyer vers le dispositif destinataire la représentation visuelle ou audio qu'il a acquise. Bien entendu, ce capteur sera configuré et orienté de sorte à permettre l'acquisition d'une représentation des utilisateurs susceptibles d'avoir accès à l'objet multimédia.

Dans un mode particulier de réalisation dans lequel ladite représentation est une représentation visuelle, le procédé de traitement comprend, lors de l'étape d'extraction, une identification de visages présents sur la représentation visuelle, ladite au moins une information extraite comprenant un nombre de visages présents identifiés sur la représentation visuelle et appartenant aux utilisateurs susceptibles d'avoir eu accès au contenu de l'objet multimédia lors de son ouverture.

Ce mode de réalisation s'appuie sur une simple identification des visages existants sur la représentation visuelle. Il ne nécessite pas à proprement parler de reconnaissance faciale des utilisateurs, seul un dénombrement des visages présents sur la représentation visuelle est recherché. Ceci est suffisant pour permettre à l'utilisateur émetteur de déterminer si l'utilisateur destinataire était seul ou non lors de l'ouverture de l'objet multimédia et détecter si d'autres personnes que l'utilisateur destinataire ont eu accès à cet objet multimédiaà ce moment-là.

Dans un autre mode de réalisation dans lequel ladite représentation est une représentation visuelle, le procédé de traitement comprend, lors de l'étape d'extraction, une identification de visages présents sur la représentation visuelle, ladite au moins une information extraite comprenant une image de chaque visage présent identifié sur la représentation visuelle et appartenant à un utilisateur susceptible d'avoir eu accès au contenu de l'objet multimédia lors de son ouverture.

L'information reportée à l'utilisateur émetteur dans ce mode de réalisation concerne non seulement le nombre de personnes ayant eu accès à son objet multimédia mais également l'identité de ces personnes via les images de leurs visages remontées à l'utilisateur émetteur. L'information obtenue par l'utilisateur sur le contexte de visualisation de son objet multimédia est ainsi plus complète.

Comme mentionné précédemment, l'invention ne se limite pas à une représentation visuelle du voisinage du dispositif destinataire telle que par exemple une photographie ou une vidéo.

Dans un autre mode de réalisation, ladite représentation est une représentation audio et le procédé de traitement comprend, lors de l'étape d'extraction, une identification de voix distinctes présentes dans la représentation audio, ladite au moins une information extraite comprenant un nombre de voix distinctes présentes dans la représentation audio et appartenant aux utilisateurs susceptibles d'avoir eu accès au contenu de l'objet multimédia lors de son ouverture.

On peut également envisager d'utiliser conformément à l'invention une représentation visuelle et une représentation audio, soit pour recouper les informations extraites de ces représentations soit pour fournir des informations plus complètes à l'utilisateur émetteur.

Dans un mode particulier de réalisation, l'étape d'extraction comprend la détermination d'un nombre d'utilisateurs susceptibles d'avoir eu accès au contenu de l'objet multimédia lors de son ouverture et dans lequel tout ou partie de l'objet multimédia reçu par le dispositif destinataire est protégé et n'est rendu accessible sur le dispositif destinataire que si le nombre d'utilisateurs déterminé est égal à 1.

Ainsi, ce mode de réalisation s'appuie sur les informations obtenues sur le voisinage du dispositif destinataire lors de l'ouverture de l'objet multimédia pour limiter l'accès au contenu de cet objet. Plus particulièrement, dans ce mode de réalisation, l'utilisateur émetteur peut restreindre l'accès à son objet multimédia à un unique utilisateur. Ceci présente un intérêt certain lorsque le contenu de l'objet multimédia est personnel et confidentiel.

L'invention vise le procédé de traitement mis en œuvre par le dispositif destinataire, et corrélativement ledit dispositif destinataire.

Comme mentionné précédemment, l'information concernant le nombre d'utilisateurs ayant eu accès au contenu de l'objet multimédia lors de son ouverture peut revêtir un caractère important pour l'utilisateur émetteur, soit pour s'assurer d'une diffusion limitée du contenu de l'objet multimédia, soit au contraire pour avoir une visibilité sur la diffusion plus large de cet objet. Aujourd'hui de nombreuses plateformes de communication (ex. plateforme de téléchargement de vidéos) s'intéressent à la visibilité de contenus multimédia diffusés sur Internet et une telle information peut s'avérer utile également dans un tel contexte.

Dans un mode particulier de réalisation, les différentes étapes du procédé de traitement d'un objet multimédia et/ou les différentes étapes du procédé d'émission d'un objet multimédia sont déterminées par des instructions de programmes d'ordinateurs.

En conséquence, l'invention vise aussi un programme d'ordinateur sur un support d'informations, ce programme étant susceptible d'être mis en œuvre dans un dispositif (destinataire ou émetteur) ou plus généralement dans un ordinateur, ce programme comportant des instructions adaptées à la mise en œuvre des étapes d'un procédé de traitement d'un objet multimédia et/ou des étapes du procédé d'émission d'un objet multimédia tel que décrit ci-dessus.

Chacun des programmes précités peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également selon un autre aspect, un système de communications comprenant :
- un dispositif émetteur ; et
- un dispositif destinataire selon l'invention ;
le dispositif émetteur étant apte à émettre un objet multimédia à destination du dispositif destinataire.

Le système bénéficie des mêmes avantages que le procédé de traitement d'un objet multimédia et le dispositif destinataire.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, dans son environnement, un système de communications conforme à l'invention, dans un mode particulier de réalisation ;
- la figure 2 représente de façon schématique l'architecture matérielle des dispositifs émetteur et récepteur du système de communications de la figure 1, dans un mode particulier de réalisation ;
- la figure 3 illustre sous forme d'ordinogramme les principales étapes d'un procédé d'émission d'un objet multimédia selon l'invention ;
- la figure 4 illustre sous forme d'ordinogramme les principales étapes d'un procédé de traitement d'un objet multimédia selon l'invention ;
- la figure 5 représente un exemple illustratif de la mise en œuvre de l'invention par le système de communications de la figure 1.

### Description détaillée de l'invention

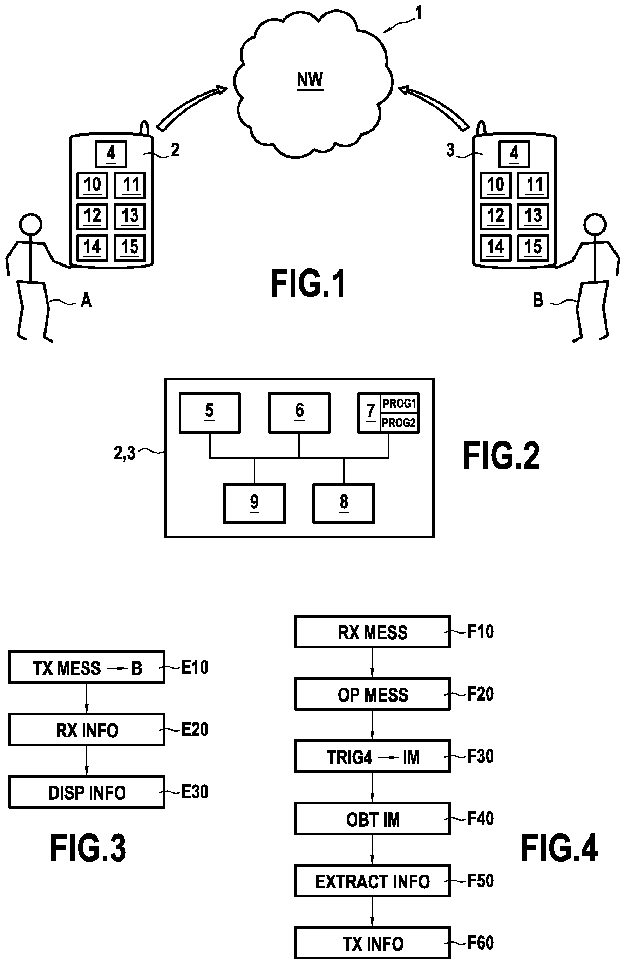

La **figure 1** représente, dans son environnement, un système de communications 1 conforme à l'invention, dans un mode particulier de réalisation. Dans l'exemple envisagé à la figure 1, le système de communications 1 encadre les échanges de messages véhiculant ou non des contenus multimédias entre un utilisateur A et un utilisateur B via un réseau de télécommunications NW. Ces messages constituent des objets multimédia au sens de l'invention.

Toutefois, aucune limitation n'est attachée à la nature des objets multimédias échangés entre les deux utilisateurs (ex. messages, images, photographies, simple texte, vidéos, etc.), ni lorsque cela est le cas, à la nature des messages véhiculant ces objets. Il peut s'agir par exemple de messages de type SMS, MMS, de messagerie instantanée, électronique, etc. On note que les objets multimédias peuvent être échangés directement entre les deux utilisateurs A et B sans recourir à un message. C'est le cas par exemple lorsque l'utilisateur A est une plateforme de téléchargement de vidéos et l'utilisateur B un particulier téléchargeant des contenus auprès de cette plateforme.

Le système de communications 1 s'appuie à cet effet sur :
- un dispositif 2 de l'utilisateur A, conforme à l'invention ; et
- un dispositif 3 de l'utilisateur B, conforme à l'invention.

Les dispositifs 2 et 3 sont ici des terminaux. Toutefois, selon le contexte d'application envisagé pour l'invention, d'autres dispositifs de communication peuvent être considérés, comme par exemple un serveur, une plateforme de services, etc.

A titre illustratif, on s'intéresse ici à un message envoyé par l'utilisateur A via son terminal 2 dit émetteur, à l'utilisateur B sur son terminal 3 dit alors destinataire. Toutefois l'invention s'applique bien entendu également aux messages envoyés par l'utilisateur B via son terminal 3 à l'utilisateur A sur son terminal 2. Les terminaux 2 et 3 peuvent être indifféremment émetteur et destinataire, autrement dit, dans le contexte de l'invention, mettre en œuvre tantôt un procédé d'émission d'un message conforme à l'invention tantôt un procédé de traitement d'un message conforme à l'invention.

Aucune limitation n'est attachée à la nature des terminaux 2 et 3 utilisés respectivement par les utilisateurs A et B. Il peut s'agir de terminaux mobiles ou fixes, de téléphones, de tablettes numériques, d'ordinateurs, etc. On suppose toutefois ici que les terminaux 2 et 3 sont équipés chacun d'au moins un capteur d'images 4 tel un appareil photographique ou d'une caméra vidéo, positionné par exemple en haut du terminal et sur sa face avant (i.e. face où se trouve l'écran) et apte à acquérir des photographies ou des images vidéo d'un voisinage du terminal faisant face au terminal. De telles photographies ou images vidéo constituent des représentations visuelles du voisinage du terminal au sens de l'invention. Un tel capteur d'images 4 équipe de nos jours couramment les terminaux d'utilisateurs et n'est pas décrit plus en détail ici.

Les terminaux 2 et 3 peuvent être en outre équipés d'autres types de capteurs, comme par exemple d'un microphone (non représenté), apte à acquérir des enregistrements de l'environnement sonore des terminaux.

Chacun des terminaux 2 et 3 a par ailleurs ici l'architecture matérielle d'un ordinateur, telle que représentée à la **figure 2****.**

Il comprend, notamment un processeur 5, une mémoire vive 6, une mémoire morte 7, une mémoire flash non volatile 8 ainsi que des moyens de communication 9 lui permettant notamment de communiquer sur le réseau NW. Suivant la nature de ce réseau, les moyens de communications 9 comprennent une carte SIM (Subscriber Identity Module) ou USIM (Universal Susbcriber Identity Module), une carte réseau, etc.

La mémoire morte 7 du terminal constitue un support d'enregistrement conforme à l'invention, lisible par le processeur 5 et sur lequel sont enregistrés ici deux programmes d'ordinateur PROG1 et PROG2 conformes à l'invention.

Le programme d'ordinateur PROG1 définit des modules fonctionnels et logiciels ici, configurés pour mettre en œuvre les étapes du procédé d'émission d'un objet multimédia selon l'invention. Ces modules fonctionnels s'appuient sur et/ou commandent les éléments matériels 5-9 du terminal cités précédemment. Ils comprennent notamment ici, comme illustré sur la figure 1 :
- un module 10 d'émission d'objets multimédia, apte à émettre un objet multimédia (message ici) vers un terminal destinataire ; ce module 10 s'appuie notamment sur les moyens de communication 9 du terminal et sur une ou plusieurs applications de messagerie ici installées sur le terminal (ex. applications de composition de SMS, MMS, de messagerie instantanée ou électronique, etc.) ; et
- un module 11 de réception d'informations, apte à recevoir en provenance du terminal destinataire des informations extraites par le terminal destinataire à partir de représentations visuelles ici de son voisinage lors de l'ouverture de l'objet multimédia envoyé par le module d'émission 10 sur le terminal destinataire. La nature de ces informations est détaillée davantage ultérieurement. Le module de réception 11 s'appuie également sur les moyens de communication 9 du terminal.

Le programme d'ordinateur PROG2 définit de manière similaire des modules fonctionnels et logiciels ici, configurés pour mettre en œuvre les étapes du procédé de traitement d'un objet multimédia selon l'invention. Ces modules fonctionnels s'appuient sur et/ou commandent également les éléments matériels 5-9 du terminal cités précédemment. Ils comprennent notamment ici, comme illustré sur la figure 1 :
- un module 12 de réception d'objets multimédia (messages ici), apte à recevoir un objet multimédia émis par un terminal émetteur, notamment via le réseau de télécommunications NW. Ce module 12, comme le module 10, s'appuie en partie sur les moyens de communication 9 du terminal, ainsi que sur une ou plusieurs applications de messagerie ici installées sur le terminal ;
- un module 13 d'obtention, configuré ici pour obtenir au moins une représentation visuelle d'un voisinage du terminal destinataire acquise lors d'une ouverture de l'objet multimédia sur le terminal destinataire. Dans le mode de réalisation décrit ici, le module 13 est apte à déclencher le capteur d'images 4 du terminal pour obtenir ladite représentation visuelle ;
- un module 14 d'extraction, configuré pour extraire de la représentation ainsi obtenue au moins une information sur des utilisateurs susceptibles d'avoir eu accès à un contenu de l'objet multimédia lors de son ouverture sur le terminal destinataire ; et
- un module 15 d'envoi de la ou des informations extraites au terminal destinataire. Le module 15 s'appuie notamment sur les moyens 9 de communication du terminal.

Les fonctions de ces différents modules sont décrites plus en détail maintenant, en référence aux étapes du procédé d'émission d'un objet multimédia (message ici) et aux étapes du procédé de traitement d'un objet multimédia selon l'invention mises en œuvre respectivement par les terminaux 2 et 3 dans l'exemple d'illustration choisi.

La **figure 3** représente les principales étapes du procédé d'émission d'un objet multimédia telles qu'elles sont mises en œuvre, dans un mode particulier de réalisation, par le terminal 2. La **figure 4** représente les principales étapes du procédé de traitement d'un objet multimédia mis en œuvre par le terminal 3 conformément à l'invention, sur réception de l'objet multimédia émis par le terminal 2.

En référence à la figure 3, on suppose que l'utilisateur A lance sur son terminal 2 une application de messagerie (par exemple messagerie instantanée ou SMS), et compose dans cette application de messagerie, un message MESS à destination de l'utilisateur B. Ce message contient un ou plusieurs contenus multimédia, comme par exemple du texte, une photo, etc. Comme mentionné précédemment le message MESS constitue un objet multimédia au sens de l'invention.

Le terminal 2, via son module 10 d'émission et ses moyens de communications 9 sur le réseau de télécommunications NW, émet le message MESS vers le terminal 3 de l'utilisateur B via le réseau NW (étape E10).

En référence à la figure 4, le terminal 3 de l'utilisateur B, par l'intermédiaire de son module 12 de réception et ses moyens de communications 9 sur le réseau de télécommunications NW, reçoit le message MESS émis par l'utilisateur A (étape F10).

Le module 12 notifie l'utilisateur B du terminal 3 de la réception d'un nouveau message, par exemple via l'émission d'un son ou l'affichage d'une icône sur l'écran du terminal 3.

On suppose que suite à cette notification, l'utilisateur B lance son application de messagerie pour ouvrir le message MESS reçu de l'utilisateur A, par exemple en cliquant sur le nouveau message reçu une fois l'application lancée (étape F20).

Conformément à l'invention, l'ouverture du message MESS par le terminal 3 déclenche l'envoi par le module d'obtention 13 d'une commande au capteur d'images 4 du terminal 3 pour que celui-ci acquière au moins une image numérique IM (voire une pluralité d'images numériques par exemple dans le cas d'une caméra vidéo) du voisinage du terminal 3 au moment de l'ouverture du message MESS (étape F30). Du fait de la position et de la configuration du capteur d'images 4 sur le terminal 3, le voisinage ainsi capturé comprend les différentes personnes (utilisateurs) faisant face au terminal 3 avec l'utilisateur B au moment où le message MESS est ouvert par ce dernier. Ces différentes personnes sont donc susceptibles d'avoir accès au contenu du message MESS en même temps que l'utilisateur B. Une telle image IM constitue une représentation visuelle du voisinage du terminal 3 lors de le l'ouverture du message MESS sur ce terminal. L'image IM acquise par le capteur d'images 4 est transmise au module d'obtention 13 qui la transmet à son tour au module d'extraction 14 du terminal 3 pour traitement (étape F40).

Conformément à l'invention, le module d'extraction 14 extrait de l'image IM diverses informations sur les utilisateurs susceptibles d'avoir eu accès au contenu du message MESS lors de son ouverture par l'utilisateur B sur le terminal 3 (étape F50). Plus particulièrement, dans le mode de réalisation décrit ici, le module 14 d'extraction met en oeuvre un algorithme d'identification des visages présents sur l'image IM. Un tel algorithme permet d'identifier dans une scène représentée sur une image numérique un ou plusieurs visages humains. De tels algorithmes d'identification de visages sont connus en soi (algorithmes génétiques, méthode de Viola et Jones, etc.) et décrits par exemple dans le document disponible à l'URL https://facedetection.com/algorithms. Aucune limitation n'est attachée à l'algorithme utilisé par le module 14 d'extraction pour identifier les différents visages présents sur l'image IM.

On note qu'il n'est pas nécessaire dans le mode de réalisation décrit ici que l'algorithme utilisé par le module d'extraction 14 permette de reconnaître ces visages, autrement dit de les associer à une personne en particulier. Dans le mode de réalisation décrit ici, il importe davantage d'identifier les différents visages présents sur l'image numérique IM en vue de les dénombrer. On note CNT le nombre de visages identifiés par le module d'extraction 14 sur l'image numérique IM.

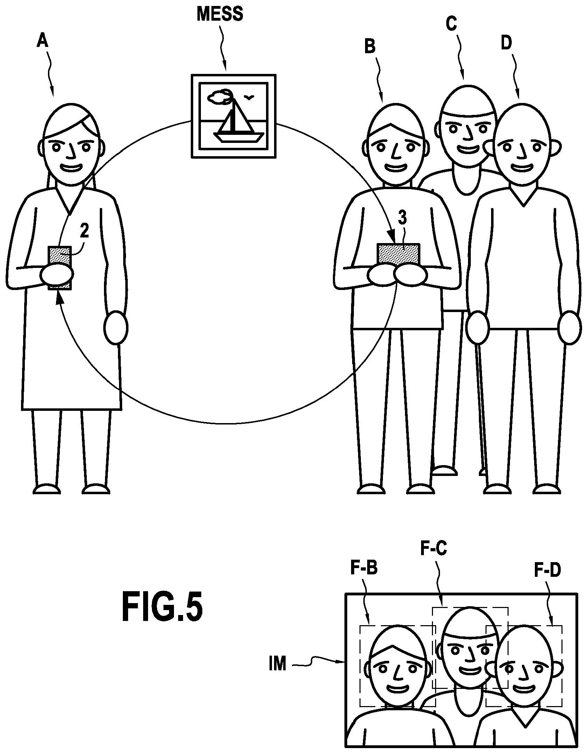

La **figure 5** illustre au moyen d'un exemple l'application de l'invention. Selon cet exemple, l'utilisateur B se trouve en compagnie de deux autres utilisateurs C et D lorsqu'il reçoit et ouvre le message MESS envoyé par l'utilisateur A. L'image IM acquise par le terminal 3 lors de l'ouverture du message représente les trois utilisateurs B, C et D. L'application de l'algorithme d'identification de visages par le module d'extraction 14 sur l'image numérique IM obtenue du capteur d'images 4 permet d'extraire les trois visages F_B, F_C et F_D des utilisateurs B, C et D respectivement. Le module d'extraction 14 compte donc CNT=3 visages sur l'image numérique IM dans cet exemple. Il en résulte que trois personnes sont susceptibles d'avoir eu accès au message MESS lors de son ouverture sur le terminal 3 de l'utilisateur B.

Dans le mode de réalisation décrit ici, le module d'extraction 14 extrait en outre de l'image IM au cours de l'étape F50 une image de chacun des visages identifiés sur l'image numérique IM. On note IM(F_B), IM(F_C) et IM(F_D) les trois images ainsi extraites dans l'exemple illustré à la figure 5.

On note que dans l'exemple illustré à la figure 5, les trois utilisateurs B, C et D font face au terminal 3 lors de l'ouverture du message MESS, ce qui simplifie l'analyse de l'image numérique IM en vue d'identifier le nombre d'utilisateurs susceptibles d'avoir eu accès au message lors de son ouverture. Bien entendu, selon le contexte de visualisation du message MESS, certains utilisateurs peuvent être orientés différemment sur l'image numérique IM. Une configuration appropriée du module d'extraction 14 permet de décider suivant l'orientation des personnes présentes sur l'image IM si celles-ci ont eu accès ou non au message et de les comptabiliser ou non parmi les personnes susceptibles d'avoir eu accès au message. Par exemple, si certains visages détectés sont de profil par rapport au plan de l'image numérique IM, il peut être supposé que les personnes associés à ces visages n'ont pas eu accès au contenu du message MESS lors de son ouverture.

Dans un autre mode de réalisation, le module d'extraction 14 met en œuvre un algorithme de reconnaissance faciale, par exemple en utilisant des photos des utilisateurs B, C et D stockées dans le terminal 3, dans son répertoire ou carnet de contacts. De cette sorte, le module d'extraction 14 est en mesure d'associer à tout ou partie des visages détectés sur l'image numérique IM le nom d'un utilisateur.

Suite à l'identification des visages présents sur l'image IM et au comptage des visages ainsi identifiés, le module 15 d'envoi d'informations du terminal 3 envoie au terminal 2, dans un message RESP émis sur le réseau de télécommunications NW, les informations qu'il a extraites de l'image IM sur les utilisateurs susceptibles d'avoir eu accès au contenu du message MESS lors de son ouverture sur le terminal 3 (étape F60). Dans le mode de réalisation décrit ici, ces informations comprennent :
- le nombre CNT (=3 dans l'exemple de la figure 5) d'utilisateurs susceptibles d'avoir eu accès au contenu du message MESS ; et
- pour chacun de ces utilisateurs, l'image de son visage identifié sur l'image IM (IM(F_B), IM(F_C) et IM(F_D) dans l'exemple de la figure 5).

Dans le mode de réalisation évoqué ci-dessus où une reconnaissance faciale est mise en œuvre par le module d'extraction 14, les informations transmises au terminal 2 peuvent comprendre en outre les noms des utilisateurs reconnus par le module d'extraction 14 sur l'image numérique IM.

Le terminal 2 reçoit le message RESP via son module 11 de réception de messages et extrait de ce message les informations reçues du terminal 3 (étape E20). Il notifie ces informations à l'utilisateur A, par exemple en les affichant sur l'écran du terminal 2 (étape E30). L'utilisateur A est ainsi informé que trois utilisateurs, dont il peut visualiser le visage, ont eu accès potentiellement au contenu de son message.

Dans le mode de réalisation décrit ici, l'ouverture du message MESS et l'accès à son contenu sont réalisées de manière inconditionnelle sur le terminal 3. Dans un autre mode de réalisation, on peut envisager qu'avant son émission par le module 10 d'émission du terminal 2, tout ou partie du contenu du message MESS soit protégé par le module 10 d'émission de sorte à n'être rendu accessible sur le terminal 3 que si le nombre CNT d'utilisateurs déterminé par le module d'extraction 14 du terminal 3 est égal à 1 ou coïncide avec un utilisateur prédéterminé particulier. Le message MESS embarque à cet effet un module logiciel permettant de contrôler ce paramètre. Un tel module logiciel est connu en soi et n'est pas décrit plus en détail ici. Dans ce mode de réalisation, suite à la détermination du nombre CNT, le module d'extraction 14 fournit ce nombre au module logiciel embarqué dans le message MESS qui vérifie si le nombre CNT est égal à 1. Le cas échéant, l'accès au contenu du message MESS protégé par le module logiciel est permis. Sinon, seules les parties du contenu du message MESS non protégées sont données en accès suite à l'ouverture du message MESS.

Bien entendu, d'autres conditions permettant de protéger l'accès au contenu peuvent être envisagées à partir des informations pouvant être extraites de l'image numérique IM.

Par ailleurs, dans le mode de réalisation décrit ici, l'image numérique IM, ou les images numériques IM si un flux d'images vidéo est acquis par le capteur d'images 4, sont acquises grâce à un capteur d'images positionnés sur le terminal 3. La plupart des terminaux sont équipés aujourd'hui de tels capteurs ce qui facilite la mise en œuvre de l'invention. Toutefois, cette condition n'est pas limitative en soi et l'invention peut être également mise en œuvre en utilisant un capteur d'images externe au terminal et commandé par le module d'obtention 13, c'est-à-dire déclenché lors de l'ouverture du message MESS sur le terminal 3. Un tel capteur peut être intégré notamment dans un objet connecté par exemple, comme par exemple dans une webcam ou tout autre type de dispositif, apte à communiquer avec le terminal 3 pour lui transmettre l'image acquise via une liaison de données ou un réseau de télécommunications (ex. liaison courte distance ou réseau NW). Dans ce cas, on veillera à disposer l'objet connecté intégrant le capteur d'images de sorte à pouvoir capturer une image du voisinage du terminal 3 lors de l'ouverture du message MESS, et de sorte que ce voisinage représente les utilisateurs susceptibles d'avoir accès au contenu du message MESS sur le terminal 3 lors de son ouverture. Cette configuration de l'objet connecté peut comprendre une orientation appropriée du capteur d'images pour que l'image IM acquise soit pertinente à la réalisation de l'invention.

Dans le mode de réalisation décrit ici, on s'est intéressé à l'acquisition et à l'analyse d'une représentation visuelle du voisinage du terminal 3 lors de l'ouverture du message MESS. Toutefois l'invention s'applique également à une représentation audio de ce voisinage, c'est-à-dire typiquement à un enregistrement sonore réalisé par exemple au moyen d'un microphone équipant le terminal 3 et déclenché lors de l'ouverture du message MESS. Dès lors, l'analyse réalisée sur cette représentation audio par le module d'extraction 14 consiste en une identification (voire une reconnaissance) des voix distinctes présentes dans l'enregistrement, en excluant les voix correspondant à un bruit de fond. Aucune limitation n'est attachée à l'algorithme d'extraction mis en œuvre par le module d'extraction 14 à cet effet. Il peut s'agir par exemple d'une technique utilisant les modèles de Markov cachés (ou HMM pour Hidden Markov Models).

A partir des voix ainsi extraites, le module 14 d'extraction déduit le nombre CNT d'utilisateurs susceptibles d'avoir eu accès au contenu du message MESS lors de son ouverture. Ce nombre CNT est ensuite transmis au terminal 2.

On note par ailleurs que l'invention a été décrite en référence à un message MESS échangés entre deux personnes physiques A et B. L'invention peut s'appliquer bien entendu à d'autres contextes ainsi qu'à d'autres objets multimédias. Ainsi par exemple l'invention peut s'appliquer dans un contexte où l'utilisateur A est un fournisseur de contenus vidéo offrant via une plateforme de téléchargement (dispositif émetteur au sens de l'invention) des vidéos (objets multimédia au sens de l'invention). L'invention présente un intérêt particulier dans ce contexte car elle permet au fournisseur de contenus vidéos de savoir, à chaque téléchargement d'une vidéo, combien d'utilisateurs ont réellement vu cette vidéo.

## Revendications

1. Procédé de traitement d'un objet multimédia (MESS) émis par un dispositif émetteur (2) et reçu (F10) par un dispositif destinataire (3), ledit procédé étant mis en oeuvre par le dispositif destinataire et comprenant :
- une étape d'obtention (F40) d'au moins une représentation visuelle ou audio d'un voisinage du dispositif destinataire acquise lors d'une ouverture de l'objet multimédia sur le dispositif destinataire ;
- une étape d'extraction (F50) de ladite représentation d'au moins une information sur des utilisateurs susceptibles d'avoir eu accès à un contenu de l'objet multimédia lors de son ouverture sur le dispositif destinataire ; et
- une étape d'envoi (F60) de ladite au moins une information au dispositif émetteur.

2. Procédé de traitement selon la revendication 1 dans lequel ladite au moins une information comprend au moins une information parmi :
- un nombre d'utilisateurs (CNT) susceptibles d'avoir eu accès au contenu de l'objet multimédia lors de son ouverture ;
- des noms desdits utilisateurs susceptibles d'avoir eu accès au contenu de l'objet multimédia lors de son ouverture ;
- lorsque ladite représentation est une représentation visuelle (IM) du voisinage du dispositif destinataire, des images desdits utilisateurs ou des visages desdits utilisateurs susceptibles d'avoir eu accès au contenu de l'objet multimédia lors de son ouverture.

3. Procédé de traitement selon la revendication 1 ou 2 dans lequel ladite représentation est une représentation visuelle et le procédé de traitement comprend, lors de l'étape d'extraction, une identification de visages présents sur la représentation visuelle, ladite au moins une information extraite comprenant un nombre de visages présents identifiés sur la représentation visuelle et appartenant aux utilisateurs susceptibles d'avoir eu accès au contenu de l'objet multimédia lors de son ouverture.

4. Procédé de traitement selon l'une quelconque des revendications 1 à 3 dans lequel ladite représentation est une représentation visuelle et le procédé de traitement comprend, lors de l'étape d'extraction, une identification de visages présents sur la représentation visuelle, ladite au moins une information extraite comprenant une image de chaque visage présent identifié sur la représentation visuelle et appartenant à un utilisateur susceptible d'avoir eu accès au contenu de l'objet multimédia lors de son ouverture.

5. Procédé de traitement selon la revendication 1 ou 2 dans lequel ladite représentation est une représentation audio et le procédé de traitement comprend, lors de l'étape d'extraction, une identification de voix distinctes présentes dans la représentation audio, ladite au moins une information extraite comprenant un nombre de voix distinctes présentes dans la représentation audio et appartenant aux utilisateurs susceptibles d'avoir eu accès au contenu de l'objet multimédia lors de son ouverture.

6. Procédé de traitement selon l'une quelconque des revendications 1 à 5 dans lequel l'étape d'extraction comprend la détermination d'un nombre d'utilisateurs (CNT) susceptibles d'avoir eu accès au contenu de l'objet multimédia lors de son ouverture et dans lequel tout ou partie de l'objet multimédia reçu par le dispositif destinataire est protégé et n'est rendu accessible sur le dispositif destinataire que si le nombre d'utilisateurs déterminé est égal à 1.

7. Procédé de traitement selon l'une quelconque des revendications 1 à 6 dans lequel la représentation visuelle ou audio est acquise au moyen d'un capteur (4) positionné sur le dispositif destinataire.

8. Procédé de traitement selon la revendication 7 dans lequel le capteur est un appareil photo ou une caméra vidéo (4) apte à acquérir au moins une image des utilisateurs faisant face au dispositif destinataire lors de l'ouverture du contenu multimédia.

9. Procédé de traitement selon l'une quelconque des revendications 1 à 7 dans lequel la représentation visuelle ou audio est acquise au moyen d'un capteur externe au dispositif destinataire et transmise vers le dispositif destinataire via une liaison de données ou un réseau de télécommunications.

10. Programme d'ordinateur (PROG1,PROG2) comportant des instructions pour l'exécution des étapes du procédé de traitement selon l'une quelconque des revendications 1 à 9 lorsque ledit programme est exécuté par un ordinateur.

11. Support d'enregistrement lisible (7) par un ordinateur sur lequel est enregistré un programme d'ordinateur comprenant des instructions pour l'exécution des étapes du procédé de traitement selon l'une quelconque des revendications 1 à 9.

12. Dispositif dit destinataire (3) comprenant :
- un module de réception (12) d'un objet multimédia émis par un dispositif émetteur ;
- un module d'obtention (13), configuré pour obtenir au moins une représentation visuelle ou audio d'un voisinage du dispositif destinataire acquise lors d'une ouverture de l'objet multimédia sur le dispositif destinataire ;
- un module d'extraction (14), configuré pour extraire de ladite représentation au moins une information sur des utilisateurs susceptibles d'avoir eu accès à un contenu de l'objet multimédia lors de son ouverture sur le dispositif destinataire ; et
- un module d'envoi (15) de ladite au moins une information au dispositif destinataire.

13. Système de communications (1) comprenant :
- un dispositif émetteur (2) ; et
- un dispositif destinataire (3) selon la revendication 12 ;
ledit dispositif émetteur étant apte à émettre un objet multimédia à destination du dispositif destinataire.

## Patentansprüche

1. Verfahren zur Verarbeitung eines Multimediaobjekts (MESS), das von einer Sendevorrichtung (2) gesendet und von einer Empfangsvorrichtung (3) empfangen wird (F10), wobei das Verfahren von der Empfangsvorrichtung durchgeführt wird und enthält:
- einen Schritt des Erlangens (F40) mindestens einer visuellen oder Audiodarstellung einer Umgebung der Empfangsvorrichtung, die bei einer Öffnung des Multimediaobjekts auf der Empfangsvorrichtung erfasst wird;
- einen Schritt der Entnahme (F50) aus der Darstellung mindestens einer Information über Benutzer, die möglicherweise während seiner Öffnung auf der Empfangsvorrichtung Zugang zu einem Inhalt des Multimediaobjekts gehabt haben; und
- einen Schritt des Sendens (F60) der mindestens einen Information an die Sendevorrichtung.

2. Verarbeitungsverfahren nach Anspruch 1, wobei die mindestens eine Information mindestens eine Information enthält unter:
- einer Anzahl von Benutzern (CNT), die möglicherweise bei seiner Öffnung Zugang zum Inhalt des Multimediaobjekts gehabt haben;
- Namen der Benutzer, die möglicherweise bei seiner Öffnung Zugang zum Inhalt des Multimediaobjekts gehabt haben;
- wenn die Darstellung eine visuelle Darstellung (IM) der Umgebung der Empfangsvorrichtung ist, Bildern der Benutzer oder der Gesichter der Benutzer, die möglicherweise bei seiner Öffnung Zugang zum Inhalt des Multimediaobjekts gehabt haben.

3. Verarbeitungsverfahren nach Anspruch 1 oder 2, wobei die Darstellung eine visuelle Darstellung ist und das Verarbeitungsverfahren im Entnahmeschritt eine Identifizierung von auf der visuellen Darstellung vorhandenen Gesichtern enthält, wobei die mindestens eine entnommene Information eine Anzahl von vorhandenen, auf der visuellen Darstellung identifizierten Gesichtern enthält, die zu den Besuchern gehören, die möglicherweise bei seiner Öffnung Zugang zum Inhalt des Multimediaobjekts gehabt haben.

4. Verarbeitungsverfahren nach einem der Ansprüche 1 bis 3, wobei die Darstellung eine visuelle Darstellung ist und das Verarbeitungsverfahren im Entnahmeschritt eine Identifizierung von auf der visuellen Darstellung vorhandenen Gesichtern enthält, wobei die mindestens eine entnommene Information ein Bild jedes vorhandenen Gesichts enthält, das auf der visuellen Darstellung identifiziert ist und zu einem Benutzer gehört, der möglicherweise bei seiner Öffnung Zugang zum Inhalt des Multimediaobjekts gehabt hat.

5. Verarbeitungsverfahren nach Anspruch 1 oder 2, wobei die Darstellung eine Audiodarstellung ist und das Verarbeitungsverfahren im Entnahmeschritt eine Identifizierung von in der Audio-Darstellung vorhandenen unterschiedlichen Stimmen enthält, wobei die mindestens eine entnommene Information eine Anzahl von unterschiedlichen Stimmen enthält, die in der Audiodarstellung vorhanden sind und zu den Benutzern gehören, die möglicherweise bei seiner Öffnung Zugang zum Inhalt des Multimediaobjekts gehabt haben.

6. Verarbeitungsverfahren nach einem der Ansprüche 1 bis 5, wobei der Entnahmeschritt die Bestimmung einer Anzahl von Benutzern (CNT) enthält, die möglicherweise bei seiner Öffnung Zugang zum Inhalt des Multimediaobjekts gehabt haben, und wobei das ganze oder ein Teil des von der Empfangsvorrichtung empfangenen Multimediaobjekts geschützt ist und auf der Empfangsvorrichtung nur zugänglich gemacht wird, wenn die bestimmte Anzahl von Benutzern gleich 1 ist.

7. Verarbeitungsverfahren nach einem der Ansprüche 1 bis 6, wobei die visuelle oder Audiodarstellung mittels eines Sensors (4) erfasst wird, der auf der Empfangsvorrichtung positioniert ist.

8. Verarbeitungsverfahren nach Anspruch 7, wobei der Sensor ein Fotoapparat oder eine Videokamera (4) ist, der(die) mindestens ein Bild der Benutzer erfassen kann, die sich bei der Öffnung des Multimediainhalts gegenüber der Empfangsvorrichtung befinden.

9. Verarbeitungsverfahren nach einem der Ansprüche 1 bis 7, wobei die visuelle oder Audiodarstellung mittels eines Sensors außerhalb der Empfangsvorrichtung erfasst und zur Empfangsvorrichtung über eine Datenverbindung oder ein Telekommunikationsnetz übertragen wird.

10. Computerprogramm (PROG1, PROG2), das Anweisungen zur Ausführung der Schritte des Verarbeitungsverfahrens nach einem der Ansprüche 1 bis 9 aufweist, wenn das Programm von einem Computer ausgeführt wird.

11. Computerlesbarer Aufzeichnungsträger (7), auf dem ein Computerprogramm aufgezeichnet ist, das Anweisungen für die Ausführung der Schritte des Verarbeitungsverfahrens nach einem der Ansprüche 1 bis 9 enthält.

12. Empfangsvorrichtung (3), die enthält:
- ein Empfangsmodul (12) eines von einer Sendevorrichtung gesendeten Multimediaobjekts;
- ein Erlangungsmodul (13), das konfiguriert ist, mindestens eine visuelle oder Audiodarstellung einer Umgebung der Empfangsvorrichtung zu erlangen, die bei einer Öffnung des Multimediaobjekts auf der Empfangsvorrichtung erfasst wurde;
- ein Entnahmemodul (14), das konfiguriert ist, aus der Darstellung mindestens eine Information über Benutzer zu entnehmen, die möglicherweise bei seiner Öffnung auf der Empfangsvorrichtung Zugang zu einem Inhalt des Multimediaobjekts gehabt haben; und
- ein Sendemodul (15) der mindestens einen Information an die Empfangsvorrichtung.

13. Kommunikationssystem (1), das enthält:
- eine Sendevorrichtung (2); und
- eine Empfangsvorrichtung (3) nach Anspruch 12; wobei die Sendevorrichtung ein Multimediaobjekt an die Empfangsvorrichtung senden kann.

## Claims

1. Method for processing a multimedia object (MESS) sent by a sending device (2) and received (F10) by a recipient device (3), said method being implemented by the recipient device and comprising:
- a step (F40) of obtaining at least one visual or audio representation of surroundings of the recipient device, acquired when the multimedia object is opened on the recipient device;
- a step (F50) of extracting, from said representation, at least one item of information regarding users liable to have had access to content of the multimedia object when it was opened on the recipient device; and
- a step (F60) of sending said at least one item of information to the sending device.

2. Processing method according to Claim 1, wherein said at least one item of information comprises at least one item of information from among:
- a number of users (CNT) liable to have had access to the content of the multimedia object when it was opened;
- names of said users liable to have had access to the content of the multimedia object when it was opened;
- when said representation is a visual representation (IM) of the surroundings of the recipient device, images of said users or faces of said users liable to have had access to the content of the multimedia object when it was opened.

3. Processing method according to Claim 1 or 2, wherein said representation is a visual representation and the processing method comprises, in the extraction step, identifying faces present in the visual representation, said at least one extracted item of information comprising a number of faces present and identified in the visual representation and belonging to the users liable to have had access to the content of the multimedia object when it was opened.

4. Processing method according to any one of Claims 1 to 3, wherein said representation is a visual representation and the processing method comprises, in the extraction step, identifying faces present in the visual representation, said at least one extracted item of information comprising an image of each face present and identified in the visual representation and belonging to a user liable to have had access to the content of the multimedia object when it was opened.

5. Processing method according to Claim 1 or 2, wherein said representation is an audio representation and the processing method comprises, in the extraction step, identifying distinct voices present in the audio representation, said at least one extracted item of information comprising a number of distinct voices present in the audio representation and belonging to the users liable to have had access to the content of the multimedia object when it was opened.

6. Processing method according to any one of Claims 1 to 5, wherein the extraction step comprises determining a number of users (CNT) liable to have had access to the content of the multimedia object when it was opened, and wherein all or some of the multimedia object received by the recipient device is protected and is made accessible on the recipient device only if the determined number of users is equal to 1.

7. Processing method according to any one of Claims 1 to 6, wherein the visual or audio representation is acquired by way of a sensor (4) positioned on the recipient device.

8. Processing method according to Claim 7, wherein the sensor is a camera or a video camera (4) able to acquire at least one image of the users facing the recipient device when the multimedia content is opened.

9. Processing method according to any one of Claims 1 to 7, wherein the visual or audio representation is acquired by way of a sensor external to the recipient device and transmitted to the recipient device via a data link or a telecommunications network.

10. Computer program (PROG1, PROG2) including instructions for executing the steps of the processing method according to any one of Claims 1 to 9 when said program is executed by a computer.

11. Computer-readable recording medium (7) on which there is recorded a computer program comprising instructions for executing the steps of the processing method according to any one of Claims 1 to 9.

12. Device, called recipient device (3), comprising:
- a module (12) for receiving a multimedia object sent by a sending device;
- an obtaining module (13), configured to obtain at least one visual or audio representation of surroundings of the recipient device, acquired when the multimedia object is opened on the recipient device;
- an extraction module (14), configured to extract, from said representation, at least one item of information regarding users liable to have had access to content of the multimedia object when it was opened on the recipient device; and
- a module (15) for sending said at least one item of information to the recipient device.

13. Communications system (1), comprising:
- a sending device (2); and
- a recipient device (3) according to Claim 12;
said sending device being able to send a multimedia object to the recipient device.
